# EUROPEAN PATENT APPLICATION

(11) **EP 3 372 333 A1**
(43) Date of publication of application: **12.09.2018**
(21) Application number: 16861770.2
(22) Date of filing: 17.10.2016
(51) Int. Cl.: B23K 9/127, B23K 9/12

(54) **ARC WELDING METHOD**

(30) Priority: 02.11.2015 JP 2015215364
(71) Applicant: Panasonic Intellectual Property Management Co., Ltd., Osaka-shi, Osaka 540-6207 (JP)
(72) Inventor: HONDA, Eiji, Osaka 540-6207 (JP); IKEDA, Tatsuya, Osaka 540-6207 (JP); KOMATSU, Takamichi, Osaka 540-6207 (JP); MATSUMOTO, Kazunori, Osaka 540-6207 (JP)
(74) Representative: Vigand, Philippe
(86) International application number: PCT/JP2016/004599
(87) International publication number: WO 2017/077692

(57) **Abstract**

An arc welding method of the present disclosure includes a teaching program creation step, a position detection step, and a welding step. In the position detection step subsequent to the teaching program creation step, a position detection program is executed with use of a welding torch having a servomotor. In the welding step subsequent to the position detection step, a welding program is executed with use of the welding torch. A gain of the servomotor that is used for position detection in the position detection step is higher than a gain of the servomotor that is used for welding in the welding step.

## Description

### TECHNICAL FIELD

The present disclosure relates to an arc welding method using a welding torch. The present disclosure relates more particularly to a position detection method in the arc welding method using the welding torch that includes a servomotor.

### BACKGROUND ART

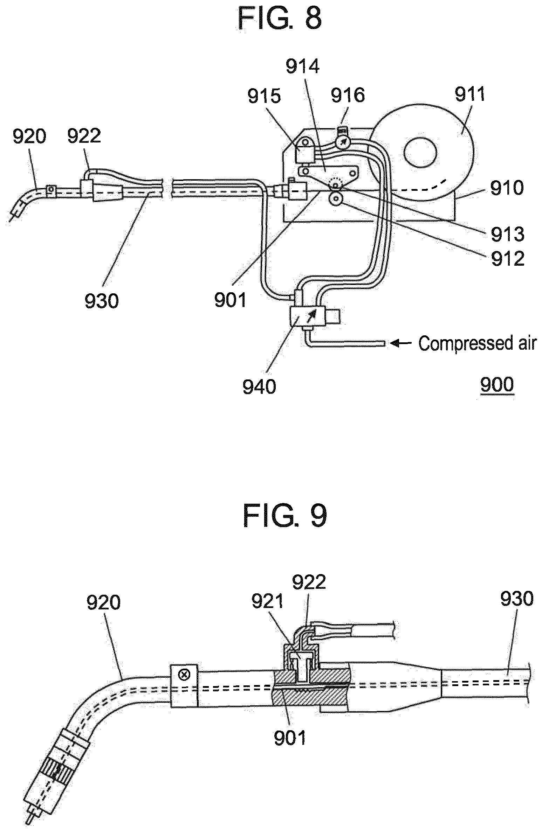

A conventional welding torch is described with reference to FIGS. 8 and 9. FIG. 8 is a schematic view illustrating structure of conventional automatic welding apparatus 900. FIG. 9 is a schematic view illustrating structure of conventional welding torch 920.

As shown in FIG. 8, conventional automatic welding apparatus 900 includes electrode feeder 910, welding torch 920, and torch cable 930 connecting electrode feeder 910 and welding torch 920. Electrode feeder 910 includes wire reel 911, feed roller 912, pressure roller 913, pressure arm 914, pressure cylinder 915, and pressure control valve 916. Consumable electrode 901 wound around wire reel 911 is fed through torch cable 930 to welding torch 920 as feed roller 912 rotates. Pressure exerted on consumable electrode 901 by pressure roller 913 is adjusted by pressure arm 914, pressure cylinder 915, and pressure control valve 916.

As shown in FIG. 9, consumable electrode 901 passes through welding torch 920 and can be clamped by application of pressure by spring back-type piston 921 (hereinafter expressed as piston 921). Piston 921 is pressurized by compressed air that is supplied to joint 922 and thus moves toward consumable electrode 901, thereby clamping consumable electrode 901.

In automatic welding apparatus 900, the compressed air is supplied to pressure cylinder 915 and joint 922 via directional control valve 940 as shown in FIG. 8, so that consumable electrode 901 can be clamped by piston 921. At the same time, the pressure exerted on consumable electrode 901 by pressure roller 913 can be released in this automatic welding apparatus 900. With consumable electrode 901 being clamped by piston 921 while the pressure exerted by pressure roller 913 is released, consumable electrode 901 is brought into contact with a base material (not shown) for position detection of the base material in a conventionally known position detection method (refer to PTL 1).

### Citation List

### Patent Literature

PTL 1: Unexamined Japanese Patent Publication No. H01-233068

### SUMMARY OF THE INVENTION

An arc welding method of the present disclosure includes a teaching program creation step, a position detection step, and a welding step. In the teaching program creation step, a teaching program including a position detection program and a welding program is created. In the position detection step subsequent to the teaching program creation step, the position detection program is executed with use of a welding torch having a servomotor. In the welding step subsequent to the position detection step, the welding program is executed with use of the welding torch. A gain of the servomotor that is used for position detection in the position detection step is higher than a gain of the servomotor that is used for welding in the welding step.

### BRIEF DESCRIPTION OF DRAWINGS

FIG. 1 is a schematic view illustrating arc welding system 1 according to an exemplary embodiment.
FIG. 2 is a side view illustrating welding torch 3 and a peripheral structure according to the exemplary embodiment.
FIG. 3 is an enlarged view of wire feeder 10 of welding torch 3 according to the exemplary embodiment.
FIG. 4 is a flow chart for an arc welding method according to the exemplary embodiment.
FIG. 5 is a flow chart for execution of a position detection command for detection position P1.
FIG. 6 is a perspective view illustrating welding torch 3 and workpiece 8 during the execution of the position detection command for detection position P1.
FIG. 7 is a perspective view illustrating welding torch 3 and workpiece 8 during the execution of the position detection command for detection position P1.
FIG. 8 is a schematic view illustrating structure of conventional automatic welding apparatus 900.
FIG. 9 is a schematic view illustrating structure of conventional welding torch 920.

### DESCRIPTION OF EMBODIMENT

Prior to a description of an exemplary embodiment of the present disclosure, a brief description is provided of a problem of a conventional apparatus.

In order for consumable electrode 901 to be clamped, conventional automatic welding apparatus 900 described above needs to be provided with pressure roller 913, pressure arm 914, pressure cylinder 915, and pressure control valve 916 in electrode feeder 910, and piston 921 and joint 922 in welding torch 920. Moreover, hoses and directional control valve 940 also are necessary for supplying compressed air to pressure cylinder 915 and piston 921. As such, the structure is very complicated.

### (Exemplary embodiment)

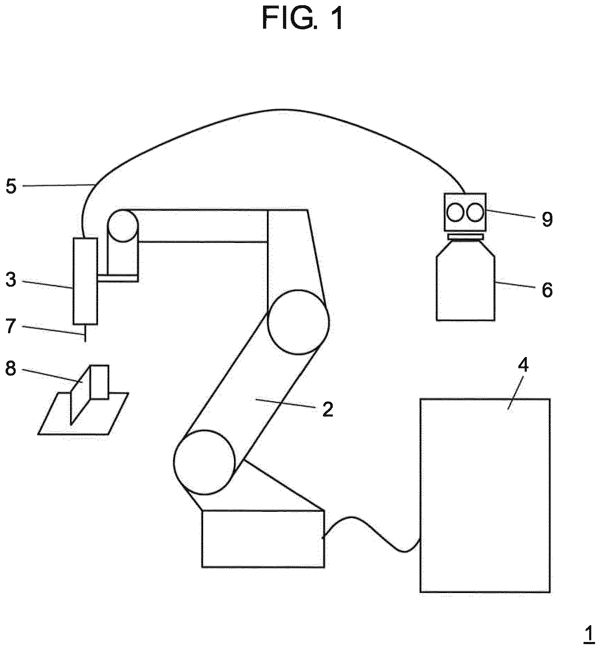

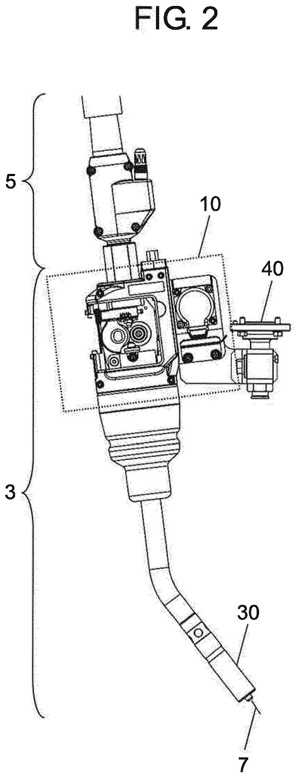

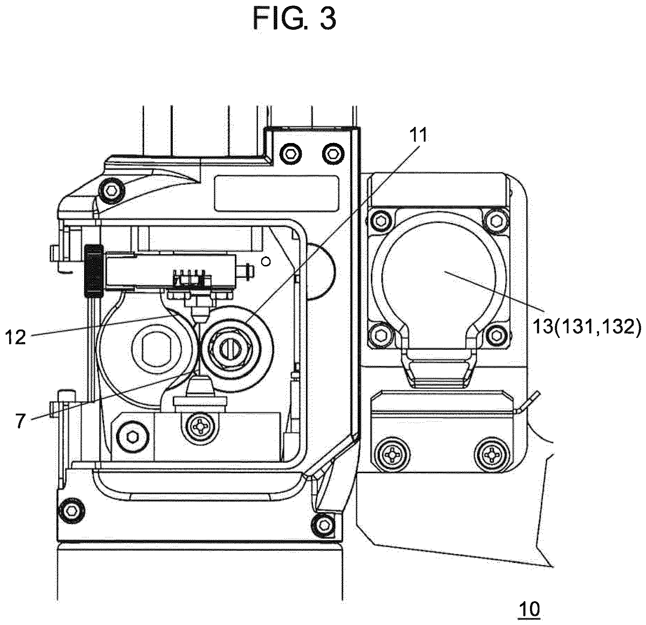

FIG. 1 is a schematic view illustrating arc welding system 1 according to the exemplary embodiment. FIG. 2 is a side view illustrating welding torch 3 and a peripheral structure according to the exemplary embodiment. FIG. 3 is an enlarged view of wire feeder 10 of welding torch 3 according to the exemplary embodiment.

As shown in FIG. 1, arc welding system 1 according to the present exemplary embodiment includes manipulator 2, welding torch 3, controller 4, wire cable 5, wire storage case 6, welding wire 7, and wire feed assist device 9. Welding torch 3 is mounted to a leading edge of a wrist of manipulator 2, and manipulator 2 and welding torch 3 are controlled by controller 4. Welding wire 7 is fed out of wire storage case 6 to welding torch 3 through wire feed assist device 9 and wire cable 5. Controller 4 controls manipulator 2 and welding torch 3 to weld workpiece 8. It is to be noted that wire feed assist device 9 feeds welding wire 7 out of wire storage case 6 to welding torch 3 with constant feeding force. The force of wire feed assist device 9 that feeds welding wire 7 is not great enough to influence wire feed operation of welding torch 3. In the present exemplary embodiment, arc welding system 1 using wire feed assist device 9 is described; however, wire feed assist device 9 is not always necessary in cases where, for example, wire cable 5 is short.

As shown in FIG. 2, welding torch 3 according to the present exemplary embodiment is connected to wire cable 5, and welding wire 7 is fed from (through) wire cable 5. By being fed by wire feeder 10, welding wire 7 sticks out of leading end 30 of welding torch 3 and is supplied to a welding point of workpiece 8. Welding torch 3 has coupler 40 and is connected to the leading edge of the wrist of manipulator 2 via coupler 40.

As shown in FIG. 3, wire feeder 10 of welding torch 3 according to the present exemplary embodiment feeds in a forward and a reverse direction welding wire 7 that is held between feed roller 11 and fixed roller 12 through rotation of feed roller 11. Feeding in the forward direction means that welding wire 7 is fed out of leading end 30 of welding torch 3, while feeding in the reverse direction means that welding wire 7 is retracted into leading end 30 of welding torch 3.

Fixed roller 12 is fixed to wire feeder 10 and according to rotation of feed roller 11, can rotate in the forward and reverse directions in which welding wire 7 is fed. Fixed roller 12 is provided to press welding wire 7 against feed roller 11.

Drive of servomotor 13 is transmitted to feed roller 11 via a gear or a belt, whereby feed roller 11 rotates to feed welding wire 7 in the forward or reverse direction. Welding wire 7 is pressed against feed roller 11 by fixed roller 12.

Servomotor 13 includes motor 131 that is driven by a wire feed command from controller 4, and encoder 132 that ascertains angular position of the motor. Based on the wire feed command from controller 4, motor 131 of servomotor 13 rotates, and the rotation of motor 131 is transmitted via the gear or the belt, thus causing feed roller 11 to rotate. Encoder 132 of servomotor 13 detects and outputs to controller 4 the angular position of motor 131 every sampling period. Based on the output angular position of motor 131 from encoder 132 of servomotor 13, controller 4 can ascertain operating condition of servomotor 13. The angular position of the motor is transmitted periodically from the encoder to controller 4. As such, controller 4 can calculate angular velocity of motor 131 and angular acceleration of motor 131 based on, in addition to the angular position of motor 131, temporal variations in the angular position of motor 131.

Servomotor 13 has a function of correcting the angular position of motor 131 when a servo lock is in its ON position. In other words, upon receipt of knowledge from encoder 132 that the angular position of motor 131 controlled by controller 4 (hereinafter referred to as control angle) has become a different angular position because of abrupt rotation of motor 131 that has been caused by external force, controller 4 drives motor 131 so that the angular position of motor 131 becomes the control angle.

Similarly, servomotor 13 has functions of correcting the angular velocity of motor 131 and the angular acceleration of motor 131 when the servo lock is in its ON position. In other words, upon determination that the angular velocity and the angular acceleration of motor 131 have been caused by external force to change into those that are respectively different from the angular velocity of motor 131 controlled by controller 4 (hereinafter referred to as control velocity) and the angular acceleration of motor 131 controlled by controller 4 (hereinafter referred to as control acceleration), controller 4 drives motor 131 so that the angular velocity and the angular acceleration of motor 131 become the control velocity and the control acceleration, respectively.

A servo lock function is adjusted by gain of servomotor 13. If the gain of servomotor 13 is higher, a motor drive correction function improves. For example, with regard to position control of servomotor 13, in cases where a position adjustment gain of servomotor 13 is higher, motor 131 is driven to quickly restore its angular position to the control angle when its angular position has deviated from the control angle because of its abrupt rotation. However, with the gain of servomotor 13 being higher, sensitivity (response) of the servo lock is higher (faster), so that there is this disadvantage that motor 131 oscillates and is thus driven unstably.

On the other hand, if the gain of servomotor 13 is lower, the angular position correction function of motor 131 is degraded. In other words, in cases where the gain of servomotor 13 is lower, motor 131 is driven to slowly restore its angular position to the control angle when its angular position has deviated from the control angle because of its abrupt rotation. For this reason, the angular position of motor 131 can temporarily deviate significantly from the control angle. However, with the gain of servomotor 13 being lower, the sensitivity (response) of the servo lock is lower (slower), so that motor 131 is driven stably without oscillating.

The gain of servomotor 13 includes, in addition to the position adjustment gain that is position control sensitivity of motor 131, a velocity adjustment gain that is angular velocity control sensitivity of motor 131 and an acceleration adjustment gain that is angular acceleration control sensitivity of motor 131. According to driven condition of motor 131, the position control gain, the velocity adjustment gain, and the acceleration adjustment gain can be set (changed) optimally. Among the control functions for servomotor 13 that include the position control, the velocity control, and the acceleration control, the control function that is unnecessary can be disabled.

A description is provided next of an arc welding method of the present exemplary embodiment.

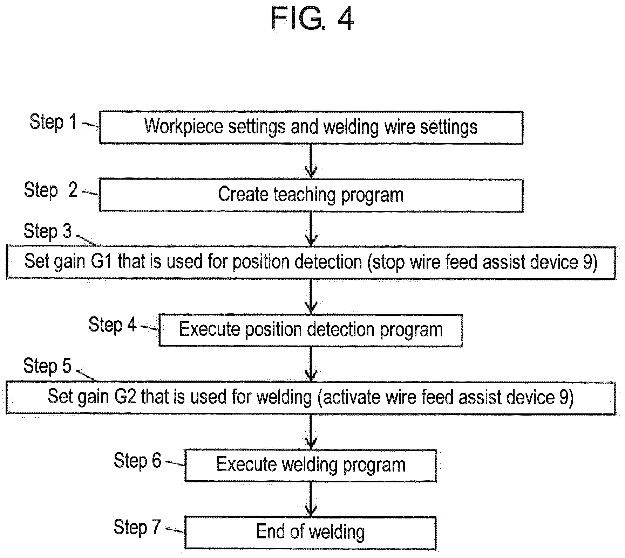

FIG. 4 is a flow chart for the arc welding method according to the present exemplary embodiment.

As shown in FIG. 4, the arc welding method using manipulator 2 that has welding torch 3 connected to the leading edge of its wrist includes steps 1 to 7.

Step 1 is a condition setting step in which settings including information on workpiece 8 and information on welding wire 7 are included in controller 4. Specifically, the settings that are included in controller 4 in step 1 include thickness of, material for and a joint shape of workpiece 8, and a diameter of and material for welding wire 7.

Next, step 2 is a teaching program creation step in which a teaching program is created in controller 4. The teaching program includes a position detection program and a welding program. The position detection program is a program that operates manipulator 2 before welding to bring welding wire 7 into contact with workpiece 8 for detection of position shifts of workpiece 8. The position detection program is formed of a plurality of position detection commands. Each of the plurality of position detection commands is an operating command for manipulator 2 to detect the shift of workpiece 8 at a designated detection position. With the position detection program, an actual location of workpiece 8 is identified.

The welding program is a program for execution of actual welding. The welding program is formed of a plurality of welding commands. Each of the plurality of welding commands includes an operating command for manipulator 2, a welding voltage command, a welding current command, and a wire feed speed command. It is to be noted that in the welding program, the operating commands for manipulator 2 are corrected based on a detection result of the last executed position detection program. This enables welding to be carried out according to the actual location of workpiece 8.

The teaching program may be created based on actual operation of manipulator 2, which is connected to welding torch 3, with respect to workpiece 8 or may be created virtually by a computer. It is to be noted that the position detection program and the welding program may be created concurrently, or after completion of creation of one of these programs, the other program may be created. It is also to be noted that in steps 1 and 2, an operator performs the settings in controller 4 by operating manipulator 2 or the personal computer.

Next, in step 3, the gain of servomotor 13 is set to gain G1 that is used for position detection. Values of gain G1 for position detection are stored in controller 4 in step 1, which is the condition setting step. In cases where wire feed assist device 9 is in action, wire feed assist device 9 is brought to a stop in step 3.

Next, step 4 is a position detection step in which the position detection program created in step 2 is executed. The execution of the position detection program causes controller 4 to control manipulator 2 based on the position detection commands that form the position detection program, whereby the position shifts of workpiece 8 are detected through contacts between welding wire 7 and workpiece 8. Step 4 is described later.

Next, in step 5, the gain of servomotor 13 is set to gain G2 that is used for welding. In other words, the gain of servomotor 13 is changed from gain G1 for position detection to gain G2 for welding. Values of gain G2 for welding are stored in controller 4 in step 1, which is the condition setting step. In step 5, wire feed assist device 9 that has been suspended is activated.

Next, step 6 is a welding step in which the welding program created in step 2 is executed. The execution of the welding program causes controller 4 to control manipulator 2 and welding torch 3 based on the welding commands that form the welding program, whereby workpiece 8 is welded. It is to be noted that information on welding positions that is included in the plurality of welding commands of the welding program is corrected based on the position detection result of step 4 for execution of the welding commands.

Lastly, the welding of workpiece 8 ends in step 7. It is to be noted that steps 3 to 7 are carried out automatically based on steps 1 and 2.

Welding work is done through above steps 1 to 7. However, in cases where a plurality of workpieces 8 undergoes exactly the same welding work, not steps 1 and 2 but steps 3 to 7 that are carried out automatically may be carried out in each work after the first.

A description is provided here of gain G1 of step 3 that is used for position detection and gain G2 of step 5 that is used for welding. Gain G1 that is used for position detection includes, as mentioned earlier, three kinds of gains, that is, position adjustment gain PG1 concerning motor position control, velocity adjustment gain VG1 concerning motor angular velocity control, and acceleration adjustment gain AG1 concerning motor angular acceleration control. Similarly, gain G2 that is used for welding includes three kinds of gains, that is, position adjustment gain PG2, velocity adjustment gain VG2, and angular velocity adjustment gain AG2.

Gain G1 of step 3 that is used for position detection is higher than gain G2 of step 5 that is used for welding. In other words, the gain of servomotor 13 in step 4, which is the position detection step, is higher than the gain of servomotor 13 in step 6, which is the welding step. As such, position shifts of welding wire 7 can be suppressed in the position detection step, which is step 4, and oscillation of servomotor 13 can be suppressed in the welding step, which is step 6, for stable welding.

As mentioned earlier, gain G1 that is used for position detection and gain G2 that is used for welding each include the three kinds of gains, that is, position adjustment gain (PG1, PG2), velocity adjustment gain (VG1, VG2), and angular velocity adjustment gain (AG1, AG2). In the present exemplary embodiment, all the three kinds of gains may be set higher when position detection is carried out than when welding is carried out. Alternatively, one or two of the three kinds of gains may be higher when position detection is carried out than when welding is carried out, and another gain in the position detection may be the same as the corresponding gain in the welding. It is to be noted that the gain concerning the function that is disabled in control of servomotor 13 is higher than the gain concerning the function that is enabled.

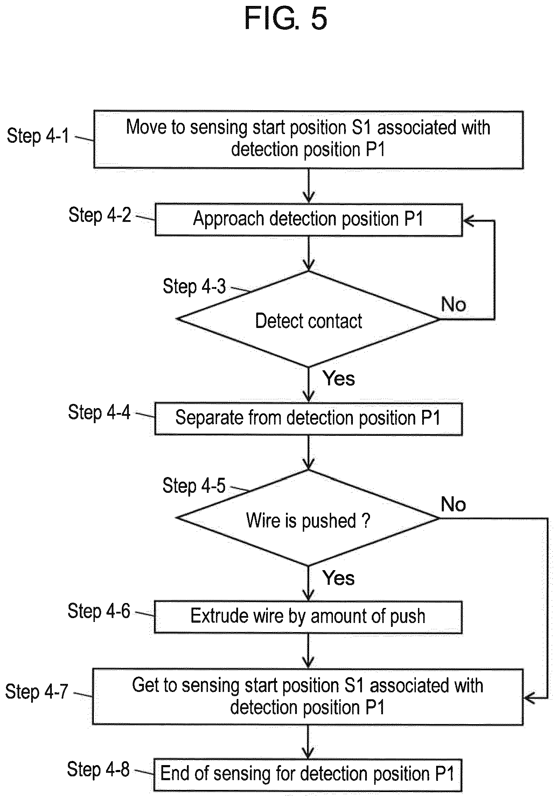

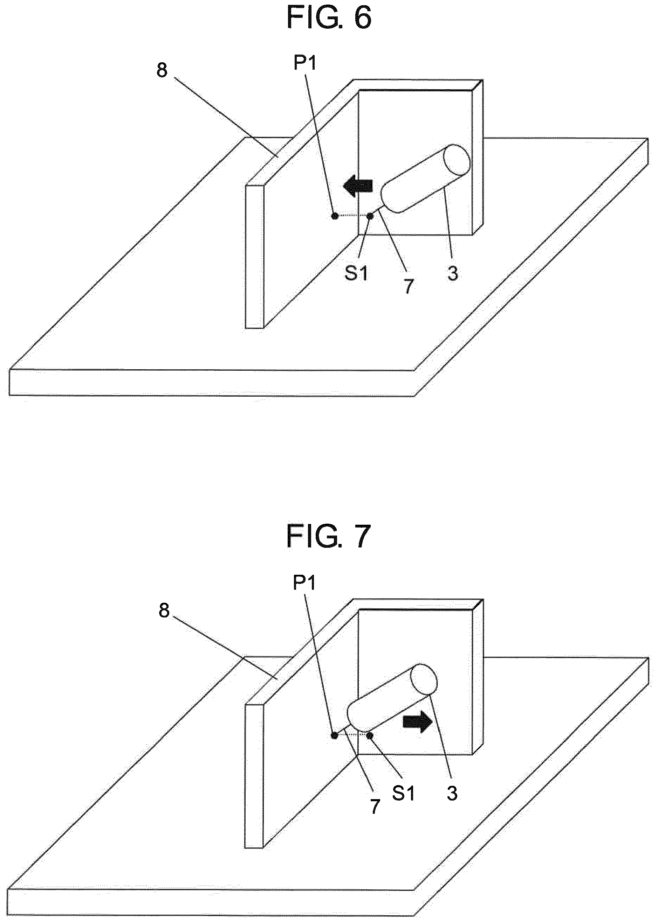

Next, the position detection step, which is step 4, is described more concretely with reference to FIGS. 5 to 7. The description is provided particularly of the setting of the position adjustment gain, using the position control function of servomotor 13 as an example. FIG. 5 is a flow chart for execution of a position detection command for detection position P1. FIGS. 6 and 7 are perspective views illustrating welding torch 3 and workpiece 8 during the execution of the position detection command for detection position P1.

First, in step 4-1, welding torch 3 is moved by the manipulator to sensing start position S1 associated with detection position P1 as shown in FIG. 6. Sensing start position S1 associated with detection position P1 is a position that is slightly away from detection position P1 on workpiece 8.

Next, in step 4-2, welding torch 3 is operated by means of the manipulator so that a tip of welding wire 7 sticking out of leading end 30 of welding torch 3 comes slightly closer to detection position P1 on workpiece 8 as indicated by an arrow in FIG. 6. A sensing voltage is applied to welding wire 7, and with a sensing voltage change, contact with workpiece 8 can be detected.

Next, in step 4-3, it is determined whether the tip of welding wire 7 has come into contact with workpiece 8. When the contact cannot be detected, a return is made to step 4-2 for further approach to detection position P1. Steps 4-2 and 4-3 are repeated until the tip of welding wire 7 is detected as being in contact with workpiece 8. When the tip of welding wire 7 is detected as being in contact with workpiece 8 as shown in FIG. 7, coordinates of detected detection position P1 on workpiece 8 are recorded in controller 4.

Next, in step 4-4, welding torch 3 is operated by means of the manipulator and thus starts to move to sensing start position S1 associated with detection position P1, separating from workpiece 8 as indicated by an arrow in FIG. 7.

Next, in step 4-5, it is determined whether welding wire 7 is pushed into welding torch 3 as a result of contact between welding wire 7 and workpiece 8 in step 4-3. A position of welding wire 7 is transmitted to servomotor 13 via feed roller 11, thus being ascertained by the encoder of servomotor 13. In cases where welding wire 7 is pushed into welding torch 3 in step 4-3, welding wire 7 is caused by the servo function (particularly the position control function) to be fed by a length of the push in step 4-6. This means that the tip of welding wire 7 is restored to a position before step 4-3. In cases where welding wire 7 is not pushed into welding torch 3 in step 4-3, that is to say, the tip of welding wire 7 is still at the position before step 4-3, step 4-6 is not carried out. It is to be noted that steps 4-5 and 4-6 are shown after step 4-4 in the flow chart for explanation. However, during execution of the position detection command, the enabled servo function of servomotor 13 has gain G1 that is set for position detection. As such, steps 4-5 and 4-6 are carried out concurrently with steps 4-3 and 4-4.

Next, in step 4-7, welding torch 3 is moved to sensing start position S1 associated with detection position PI, and the position detection command for detection position P1 ends in step 4-8.

In a position detection method according to the present exemplary embodiment, as described above, even when welding wire 7 experiences a position shift as a result of contact between welding wire 7 and workpiece 8 for position detection, a return can be made to a previous position in steps 4-5 and 4-6 with the servo function (particularly the position control function) of servomotor 13.

In the position detection method according to the present exemplary embodiment, the gain (position adjustment gain PG1 of gain G1 that is used for position detection) of servomotor 13 in the position detection step is higher than the gain (position adjustment gain PG2 of gain G2 that is used for welding) of servomotor 13 in the welding step, so that coordinates of detection position P1 that are recorded in step 4-3 can be ascertained more accurately.

When the detection position changes in the position detection step, manipulator 2 makes a large movement, whereby welding wire 7 experiences a position shift resulting from deformation of wire cable 5. However, since the gain (position adjustment gain PG1 of gain G1 that is used for position detection) of servomotor 13 in the position detection step is higher than the gain (position adjustment gain PG2 of gain G2 that is used for welding) of servomotor 13 in the welding step in the position detection method according to the present exemplary embodiment, a position variation of the tip of welding wire 7 as a result of such deformation of wire cable 5 also can be suppressed.

In the present exemplary embodiment, since the position control of servomotor 13 has been explained as the example, the change (PG1 > PG2) between position adjustment gains (PG1, PG2) has been described. However, the arc welding method of the present disclosure is not limited to position adjustment gains (PG1, PG2) and may include a change (VG1 > VG2) between velocity adjustment gains (VG1, VG2) and a change (AG1 > AG2) between angular velocity adjustment gains (AG1, AG2). In other words, one of the position adjustment gain, the velocity adjustment gain, and the acceleration adjustment gain of the gain in the position detection step may be higher than the corresponding gain of the gain in the welding step, while the other gains in the position detection step may respectively be equal to the other gains in the welding step. As an alternative, two of the position adjustment gain, the velocity adjustment gain, and the acceleration adjustment gain of the gain in the position detection step may respectively be higher than the corresponding gains of the gain in the welding step, while the other gain in the position detection step may be equal to the other gain in the welding step. As another alternative, the position adjustment gain, the velocity adjustment gain, and the acceleration adjustment gain of the gain in the position detection step may all be higher than the corresponding gains of the gain in the welding step, respectively.

### INDUSTRIAL APPLICABILITY

An arc welding method according to the present disclosure enables a welding torch of simple structure to perform proper position control of a welding wire in position detection and is thus industrially useful.

### REFERENCE MARKS IN THE DRAWINGS

- 1: arc welding system
- 2: manipulator
- 3: welding torch
- 4: controller
- 5: wire cable
- 6: wire storage case
- 7: welding wire
- 8: workpiece
- 9: wire feed assist device
- 10: wire feeder
- 11: feed roller
- 12: fixed roller
- 13: servomotor
- 30: leading end
- 40: coupler
- G1: gain used for position detection
- G2: gain used for welding
- PG1: position adjustment gain (during position detection)
- PG2: position adjustment gain (during welding)
- VG1: velocity adjustment gain (during position detection)
- VG2: velocity adjustment gain (during welding)
- AG1: acceleration adjustment gain (during position detection)
- AG2: acceleration adjustment gain (during welding)
- P1: detection position
- S1: sensing start position
- 131: motor
- 132: encoder
- 900: automatic welding apparatus
- 901: consumable electrode
- 910: electrode feeder
- 911: wire reel
- 912: feed roller
- 913: pressure roller
- 914: pressure arm
- 915: pressure cylinder
- 916: pressure control valve
- 920: welding torch
- 921: piston
- 922: joint
- 930: torch cable
- 940: directional control valve

## Claims

1. An arc welding method comprising:
a teaching program creation step of creating a teaching program including a position detection program and a welding program;
a position detection step of executing the position detection program with use of a welding torch having a servomotor subsequently to the teaching program creation step; and
a welding step of executing the welding program with use of the welding torch subsequently to the position detection step,
wherein a gain of the servomotor that is used for position detection in the position detection step is higher than a gain of the servomotor that is used for welding in the welding step.

2. The arc welding method according to claim 1, wherein:
any one of a position adjustment gain, a velocity adjustment gain, and an acceleration adjustment gain of the gain in the position detection step is higher than a corresponding one of a position adjustment gain, a velocity adjustment gain, and an acceleration adjustment gain of the gain in the welding step; and
other two of the position adjustment gain, the velocity adjustment gain, and the acceleration adjustment gain of the gain in the position detection step are respectively equal to other two of the position adjustment gain, the velocity adjustment gain, and the acceleration adjustment gain of the gain in the welding step.

3. The arc welding method according to claim 1, wherein:
any two of a position adjustment gain, a velocity adjustment gain, and an acceleration adjustment gain of the gain in the position detection step are respectively higher than corresponding two of a position adjustment gain, a velocity adjustment gain, and an acceleration adjustment gain of the gain in the welding step; and
another one of the position adjustment gain, the velocity adjustment gain, and the acceleration adjustment gain of the gain in the position detection step is equal to another one of the position adjustment gain, the velocity adjustment gain, and the acceleration adjustment gain of the gain in the welding step.

4. The arc welding method according to claim 1, wherein a position adjustment gain, a velocity adjustment gain, and an acceleration adjustment gain of the gain in the position detection step are all respectively higher than a position adjustment gain, a velocity adjustment gain, and an acceleration adjustment gain of the gain in the welding step.
